(19) Europäisches Patentamt
European Patent Office
Office européen des brevets

(11) EP 4 575 932 A1

(12) EUROPEAN PATENT APPLICATION

(43) Date of publication:
25.06.2025 Bulletin 2025/26

(51) International Patent Classification (IPC):
$G06N\ 10/70^{(2022.01)}$ $G06N\ 10/20^{(2022.01)}$

(21) Application number: 23219489.4

(22) Date of filing: 21.12.2023

(52) Cooperative Patent Classification (CPC):
G06N 10/70; G06N 10/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Commissariat à l'Energie Atomique et
aux Energies
Alternatives
75015 Paris (FR)

(72) Inventors:
• BLUNDEN-CODD, Zachary
91191 Gif-sur-Yvette Cedex (FR)
• SAZONOV, Vasily
91191 Gif-sur-Yvette Cedex (FR)
• TAMAAZOUSTI, Mohamed
91191 Gif-sur-Yvette Cedex (FR)
• HERRERA-MARTI, David
91191 Gif-sur-Yvette Cedex (FR)

(74) Representative: Brevalex
Tour Trinity
1 B Place de la Défense
92400 Courbevoie (FR)

(54) **COMPUTING METHOD AND SYSTEM FOR QUASI-STOCHASTIC NOISE TAILORING**

(57) The present invention concerns a computing method and a computing system for quasi-stochastic noise tailoring of a target gate, comprising:
-a quantum computer or device (3) configured to implement a set $\left\{\tilde{U}_i\right\}_{i=0}^{N_M}$ of noisy gate-variants limited to noisy copies of the (noisy) target gate $\tilde{U}_T$ to be tailored, and to characterise each noisy gate-variant $\tilde{U}_i$ by determining its corresponding noise channel $\varepsilon_i$, and
-a classical computer (5) configured to determine a linear combination of the noise channels $\varepsilon_i$ that is equivalent to a tailored noise channel $\varepsilon_T$ of interest.

$$\tilde{U}_T = (U, \varepsilon_i) \quad \text{E1}$$

$$\left\{\tilde{U}_i\right\}_{i=0}^{N_M} \quad \text{E2}$$

$$\tilde{U}_i = (U, \varepsilon_i) \longrightarrow \varepsilon_i \leftrightarrow \hat{T}_{\varepsilon_i} \quad \text{E3}$$

$$\left\{\varepsilon_i\right\} \longrightarrow \varepsilon_T \quad \text{E4}$$
$$\sum_{i=0}^{N_M} c_i \hat{T}_{\varepsilon_i} = \hat{T}_{\varepsilon_T}$$

$$\tilde{U}_i \longrightarrow \langle\hat{o}\rangle_n \quad \text{E5}$$

$$\langle\hat{o}\rangle_n = \frac{1}{N_R}\sum_{n=0}^{N_R} C_n\langle\hat{o}\rangle_n \quad \text{E6}$$

FIG. 2

EP 4 575 932 A1

## Description

### FIELD OF THE INVENTION

The present invention relates to the field of quantum computing. More particularly, it relates to a computing system and a computing method for noise tailoring and error mitigation.

### BACKGROUND OF THE INVENTION

Quantum computers use quantum phenomena such as superposition and entanglement to perform computations. By precisely controlling these phenomena, it is, in principle, possible for quantum computers to outperform their classical counterparts. Quantum computers have myriad potential applications, including chemical modelling, encryption, and optimising search algorithms.

Quantum computing is based on the manipulation of quantum bits, or "qubits", which can be thought of as a superposition of the 1 and 0 states of a quantum physical variable.

A qubit is the basic unit of quantum information, it can be present as a single qubit quantum state $|\psi\rangle_1$ which corresponds to a superposition $|\psi\rangle_1 = \alpha|0\rangle + \beta|1\rangle$ of the basis states $|0\rangle$ and $|1\rangle$), where $\alpha$ and $\beta$ are complex numbers that satisfy the normalisation constraint, $|\alpha|^2 + |\beta|^2 = 1$. The quantum state $|\psi\rangle_1$ is a vector in a complex linear vector space known as the Hilbert space. The set $\{|0\rangle, |1\rangle\}$ is an orthogonal basis of the Hilbert state, called the computational basis (also known as the Z-basis). This basis is not unique. For example, another important basis is the phase basis (also known as the X-basis).

The basis states can be extended to $N_Q$ qubits, where $N_Q > 1$, by a tensor product. For a binary vector $u = (u_1, ..., u_N) \in \{0,1\}^{N_Q}$, let $|u\rangle = |(u_1, ..., u_N)\rangle := |u_1\rangle \otimes \cdots \otimes |u_N\rangle$. The set $\{|u\rangle | u \in \{0,1\}^{N_Q}\}$ is the computational basis on $N_Q$ qubits. Any $N_Q$ qubit quantum state $(|\psi\rangle_{N_Q})$ can be written as a superposition of the $N_Q$ qubit computational basis states, which are tensor products of $N_Q$ single qubit basis states, but $|\psi\rangle_{N_Q}$ is not necessarily a tensor product of $N_Q$ single qubit states.

Quantum computation is carried out by applying quantum gates on qubits. Some examples of these quantum gates are Pauli, Hadamard, T, and CNOT gates.

Pauli gates are a set of four quantum gates, denoted by I, X, Y, Z, which act on a single qubit. Note that $Y = iXZ$, and $X^2 = Y^2 = Z^2 = I$, where I is the identity operator. Pauli X acts like a NOT gate in the computational basis and Pauli Z acts like a NOT gate in the phase basis.

Pauli gates are extended to act on $N_Q$ qubits by a tensor product. For example, $X \otimes Z$ is a Pauli (Word) operator on two qubits.

Although there are different technologies for implementing quantum computers, they all share the same shortcoming, namely that the qubits and gates are affected by noise and decoherence, which prevent quantum devices from producing useful results. While bits in classical computers are physically materialised by the on/off states of transistor switches with high error margins, there is no such certainty for qubits. Indeed, the fragile superposition of states of a qubit can easily be disturbed by its environment and collapse, resulting in a loss of information. Quantum computers therefore require some procedure to suppress the noise at a physical and/or logical level, an example of a noise suppression technique is error mitigation. Note that error correction checks for and corrects errors as they occur in a computation whereas error mitigation corrects for the average effect of an error over many runs of a computation. Error correction strategies generally require a qubit overhead, using many physical qubits to encode one logical qubit. Error mitigation usually has a sampling overhead, meaning that a mitigated experiment must be run more times than an unmitigated one to obtain results with the same precision.

Error mitigation uses a combination of circuit manipulation and post-processing with a computer to suppress the effects of errors in quantum devices. The quality, or fidelity, of results from Noisy Intermediate Scale Quantum (NISQ) devices decays exponentially as a function of the average number of faults in a circuit, which is the product of the probability of error per gate and the number of gates in the circuit, if every gate has the same error probability. High-precision quantum devices, or those requiring large circuits, require very low per-gate error levels. Error mitigation is intended to suppress noise in existing NISQ devices and to complement quantum error correction in fault tolerant quantum computers.

Error mitigation protocols are characterised by their residual bias (the error remaining after mitigation), their sampling cost, and the increase in the circuit duration. Sampling cost is the square root of the ratio of the number of samples required in the mitigated case to the number of samples required in the unmitigated case, to obtain results of the same precision. The increase in circuit duration is due to the number of additional gates that must be added to the circuit for the mitigation.

Certain noise models known as stochastic noise models (e.g. Pauli noise) can be easier to characterise, mitigate and/or correct than others. There are techniques for converting general noise channels into Pauli noise, such as Pauli twirling, which consists of stochastically placing Pauli operators on either side of the gate to be twirled. However, they generally introduce additional errors into the circuit that are not accounted for in existing methods.

An example of twirling is described in US2019/0018721. In particular, this prior art method generalises the standard Pauli twirling technique to allow twirling of non-Clifford operators. Gates are stochastically placed before and after the gate to be twirled. One of the gates is a Pauli gate and the other is a gate that inverts the effect of the Pauli gate, taking into account the fact that there is a gate in between. In the absence of coherent noise, the twirling has no effect, but it will convert a coherent noise channel into a Pauli noise channel.

The twirling will introduce additional noise if the twirling gates are noisy, which we would expect for any currently foreseeable quantum device. If the twirling gates are noisy, then the twirled operator will generally have coherent noise, though this is avoided if the twirling gates all have the same noise model and this noise model commutes with all the twirling operators. In particular this means one cannot effectively and efficiently twirl Pauli gates because to do so one would require noise free Pauli gates, to implement the twirling procedure. If these were available there would be no need for the twirling procedure in the first place.

There are a number of other noise suppression techniques that are in use for gates that are Hermitian. One such example is the use of hidden inverses described for example in Bichen Zhang et al. "Hidden inverses: Coherent error cancellation at the circuit level". Phys. Rev. Appl. 17, 034074 (2022). Within a quantum circuit, Hermitian gates are identified and for each occurrence one chooses between the standard hardware implementation and the inverse (which can be obtained, for example, by reversing the order and direction of constituent rotations), so that nearby Hermitian gates of the same type are inverses of each other. If there are intermediate gates, then the errors should still be reduced, but to a lesser extent that will depend on the size of the noise (e.g. the magnitude of the over-rotation for over-rotation errors). For Hidden Inverses to be effective one requires that the coherent errors associated with the inverse gate are the inverse of those for the forward gate. Furthermore, it is only designed to work for Hermitian gates (which does not include T or S gates, common components of basis gate sets).

In general, the prior art techniques introduce additional errors into a circuit, are only applicable to certain types of gates, and/or are not efficient for twirling Pauli gates.

In addition, the prior art fails to create or craft a specific type of error with specific characteristics on demand. Creating specific types of errors can be advantageous, for example, for testing the robustness of a quantum device or algorithm to these errors and using one quantum device to simulate another.

An object of the present invention is to remedy the aforementioned drawbacks by proposing a computing system that can craft specific types of errors, that can be used for high precision error mitigation to all orders, and that can be applied to Pauli operators and a universal gate set.

**BRIEF DESCRIPTION OF THE INVENTION**

The present invention concerns a computing system for quasi-stochastic noise tailoring of a target gate, which may be a noise-free target gate ($U$) or a noisy target gate ($\tilde{U}_\mathrm{T}$), comprising:

- a quantum computer or device configured to implement a set $\left\{\tilde{U}_i\right\}_{i=0}^{N_\mathrm{M}}$ of noisy gate-variants (where $N_\mathrm{M}$ is the number of additional gates required for the mitigation or tailoring), which are different implementations of the target gate to be tailored, with different noise models, and/or to characterise each noisy gate-variant $\tilde{U}_i$ by determining its corresponding noise channel, and
- a classical computer configured to determine a linear combination of the noise channels that is equivalent to a tailored noise channel of interest and/or to aid in the characterisation of each noisy gate-variant.

This allows the noise channel to be designed in a desired way depending on the properties of the available noisy gate-variants . For example, the noise can be modified to study the behaviour of a quantum computer with respect to a particular type of noise, or to verify the robustness of an algorithm to a certain type of noise. It also makes it possible to create a noise channel with specific features, for example a noise channel represented by an error transfer matrix where some of its off-diagonal elements are non-zero. It allows the effective error channel to be reduced or removed, or converted into a more suitable channel, such as a Pauli or depolarising noise channel.

Advantageously, the classical computer is configured to represent each noise channel $\varepsilon_i$ by a corresponding error Pauli transfer matrix $\hat{T}_{\varepsilon_i}$ and represent the tailored noise channel of interest by a corresponding tailored error transfer matrix $\hat{T}_{\varepsilon_\mathrm{T}}$, such that the determination of said linear combination is equivalent to solving the following target equations:

$$\sum_{i=0}^{N_\mathrm{M}} c_i \hat{T}_{\varepsilon_i} = \hat{T}_{\varepsilon_\mathrm{T}'}$$

where $c_i$ are the linear coefficients of the linear combination.

This simplifies the determination of the linear combination and in some cases it can be determined explicitly by matrix inversion.

Advantageously, the classical computer is configured to determine a set of said linear coefficients $c_i$ such that the sampling cost (i.e. sum of the absolute values of the coefficients of the different implementations) is minimised.

This reduces the number of times the quantum computer needs to run to achieve a high level of accuracy.

The characterisation of the set of noisy gate-variants $\tilde{U}_i$ may be carried out by tomography on the quantum computer or by simulation on the classical computer.

Advantageously, the quantum computer or device is configured to implement the set $\left\{\widetilde{U}_i\right\}_{i=0}^{N_\mathrm{M}}$ of noisy gate-variants according to the corresponding set of linear coefficients $c_i$ such that each noisy gate-variant $\tilde{U}_i$ is executed on the quantum computer with a probability related to the corresponding coefficient $c_i$, the quantum computer being further configured to implement a quantum measurement to measure the outcome of the circuit that features the noisy gate-variant $\tilde{U}_i$ at each execution; and in that the classical computer is configured to calculate a linear combination (i.e. a weighted sum) of all measured outcomes with coefficients derived from the set of linear coefficients $c_i$.

Thus, accuracy is maximised with a minimum number of quantum computer runs.

Advantageously, the quantum computer or device is configured to implement the noisy gate-variants using one or a combination of the following techniques: different pulse sequences, changing the hardware implementation of the target gate, different compositions with respect to other gates, adding additional gates before or after the target gate, and alternating sets of the target gate and its inverse (which may be the same gate if it is Hermitian).

According to an embodiment of the present invention, the tailored noise channel of interest is a Pauli noise channel represented by a tailored error transfer matrix whose off-diagonal elements are all equal to zero.

This allows general noise to be converted to Pauli noise without the need for Pauli twirling and without the need to access noiseless or low-noise Pauli operators.

Advantageously, the quantum computer is configured to implement the set $\left\{\widetilde{U}_i\right\}_{i=0}^{N_\mathrm{M}}$ of the noisy gate-variants such that the sum of the modulus of the linear coefficients $c_i$ is equal to unity or that the sum of the modulus of their linear coefficients ($\sum_{i=0}^{N_\mathrm{M}}|c_i|$) is minimal. The classical computer is configured to restrict the solution of the target equations $\hat{T}_{\varepsilon_\mathrm{T}}$ to have only diagonal elements. To avoid trivial solutions, the sum of the linear coefficients $c_i$ should not be zero $\sum_{i=0}^{N_\mathrm{M}} c_i = \varpi \neq 0$. It may be convenient to use $\varpi = 1$ to ensure normalisation. This allows general noise to be converted to Pauli noise without solving all the following equations: $\sum_{i=0}^{N_M} c_i \hat{T}_{\varepsilon_i} = \hat{T}_{\varepsilon_\mathrm{T}}$. Those relating to the diagonal elements can be ignored. Furthermore, Pauli operators can be 'twirled' with this approach (i.e. have their effective noise channels converted to Pauli noise channels).

According to another embodiment of the present invention, the tailored noise channel of interest is a noise-free channel corresponding to a targeted error transfer matrix equal to the identity (i.e. the off-diagonal elements are all equal to zero and the diagonal elements are all equal to one) giving a noise-free gate.

In this way, errors can be completely eliminated with precision dependent only on the precision and accuracy of the characterisation of the gate and implementation of the mitigation procedure.

Advantageously, the quantum computer is configured to implement the set $\left\{\widetilde{U}_i\right\}_{i=0}^{N_\mathrm{M}}$ of the noisy gate-variants by using only repeated applications of $\tilde{U}$, a single noisy variant of the target gate $U$ to be mitigated, and the noisy inverse gate ($\widetilde{U^\dagger}$), which may be equal to $\tilde{U}$, if the gate is Hermitian, and such that the error transfer matrices of $\tilde{U}$ and $\widetilde{U^\dagger}$ are diagonalisable and commute with the transfer matrix of the noisy gate $\tilde{U}$ as well as with the transfer matrix of the inverse noisy gate $\widetilde{U^\dagger}$. The classical computer is configured to determine a set $\left\{\lambda_k\right\}_{k=0}^{N_\mathrm{M}}$ of distinct eigenvalues of the error transfer matrix and to determine the linear coefficients $c_i$ by solving the following set of eigenvalue equations:

$$\sum_{i=0}^{N_\mathrm{M}} c_i \lambda_k^{2i+1} = 1.$$

This allows a high level of precision to be achieved, as the remaining uncertainty is only due to the limitations of the measurement precision and limitations on the number of executions on the quantum computer.

According to an embodiment of the present invention, the quantum computer or device is configured to implement in hardware a collection of elementary physical operations which could be concatenated to form a quantum circuit or gate. The quantum computer or device is configured to implement a set $\{\tilde{u}_i\}_{i=0}^{N_\mathrm{p}}$ of noisy physical operation-variants for each elementary noise-free physical operation, each physical operation-variant having the same noise-free component but a different elementary noise channel, and to characterise each noisy physical operation-variant by determining its corresponding elementary noise channel. The classical computer is configured to determine a linear combination of the elementary noise channels $\varepsilon_i$ that is equivalent to a tailored elementary noise channel $\varepsilon_\mathrm{T}$ of interest.

This simplifies the mitigation and characterisation of the noise of a quantum gate or circuit.

According to one aspect of the present invention, the elementary physical operations form an efficient universal set of elementary physical-operations for quantum computing, in that a given collection of elementary physical operations can efficiently represent any given quantum circuit at any precision, that is with a polynomial overhead in the number of gates in the target circuit, where the overhead associated with the increase in precision is polynomial in the inverse of the precision.

In variant, the elementary physical operations form an efficient complete set of elementary physical-operations for a specific purpose proposed for the quantum computer or device, in that a given collection of elementary physical operations can efficiently represent any given quantum circuit that is required for the execution of the specific purpose of the quantum computer or device to arbitrary precision, where the overhead associated with the increase in precision is polynomial in the inverse of the precision.

Advantageously, the computing system comprises a classical-quantum interface configured to couple the classical computer to the quantum computer.

The present invention also relates to a computing method for a quasi-stochastic noise tailoring of a target gate, comprising the following steps:

- implement, using a quantum computer, a set $\{\tilde{U}_i\}_{i=0}^{N_\mathrm{M}}$ of noisy gate-variants, which are variants of the target gate to be tailored with the same noise free component but different noise channels,
- characterise each noisy gate-variant $\tilde{U}_i$ by determining its corresponding noise channel, and
- determine, using a classical computer, a linear combination of the noise channels that is equivalent to a tailored noise channel of interest.

## BRIEF DESCRIPTION OF THE DRAWINGS

The present invention will be better understood from the description of the following embodiments, by way of illustration and in no way limitative thereto:

Fig. 1 schematically represents a computing system for stochastic noise tailoring of a target gate, according to a preferred embodiment of the present invention;
Fig. 2 is a flowchart schematically representing the steps realised by the computing system of Fig. 1, according to a first preferred embodiment of the present invention;
Fig. 3 is a flowchart schematically representing the steps realised by the computing system of Fig. 1, according to a second preferred embodiment of the present invention;
Fig. 4 is a flowchart schematically representing the steps realised by the computing system of Fig. 1, according to a third preferred embodiment of the present invention; and
Fig. 5 is a flowchart schematically illustrating the steps performed by the computing system of Fig. 1 according to a fourth preferred embodiment of the present invention.

## DETAILED DISCLOSURE OF PARTICULAR EMBODIMENTS

The present invention proposes a computing system for quasi-stochastic noise tailoring which converts the general noise of a selected gate, hereinafter referred to as a target gate, into a specifically tailored noise, which may be Pauli noise or any other type of noise, or into no noise at all.

The principle of the present invention is to produce multiple hardware implementations of the target gate and to characterise their noises. Then, when a circuit calls for the use of the selected gate in question, a random selection of hardware implementations of the given gate are implemented from a carefully tailored probability distribution. The distribution is chosen so that the effective gate (averaged over many iterations of the circuit, with appropriate pre-factors rescaling the outputs of each circuit) is one that exhibits only the specifically tailored noise.

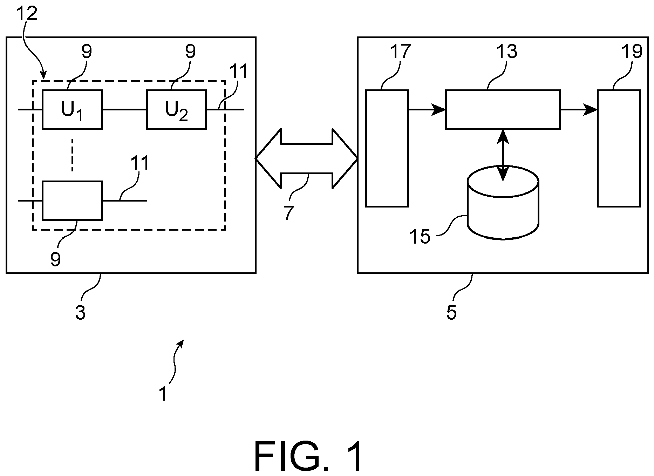

Fig. 1 schematically represents a computing system for stochastic noise tailoring of a target gate, according to a preferred embodiment of the present invention.

The computing system 1 comprises a quantum computing system or device, hereinafter referred to as a quantum computer 3, a classical computer 5, and a classical-quantum interface 7.

The quantum computer 3 implements a quantum algorithm represented by a quantum circuit 12. The circuit is comprised of different types of quantum gates 9 that are interconnected by wires 11. The wires 11 represent periods of time when no gate is applied. The length of the wires is not necessarily proportional to the time, but they are included to ensure that the gates occur in the correct order. The quantum gates 9 execute some operations on the qubits as part of a quantum computation. The classical computer 5 comprises the usual processor 13, memory 15 and input/output 17, 19 units. The classical-quantum interface 7 is configured to couple the classical computer 5 to the quantum computer 3.

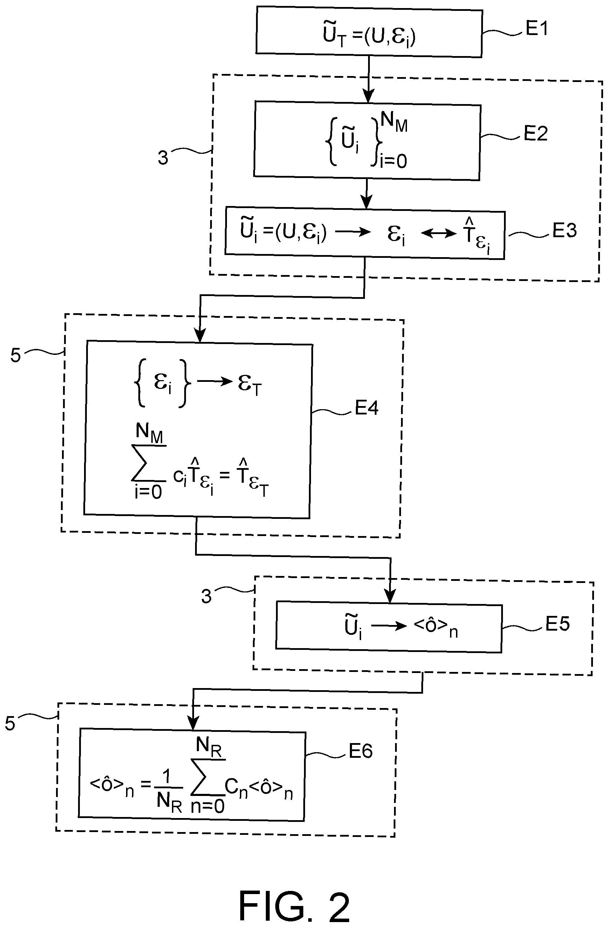

Fig. 2 is a flowchart schematically representing the steps realised by the computing system of Fig. 1, according to a first preferred embodiment of the present invention.

The steps more likely to be implemented by the quantum computer 3 are shown on the right and those more likely to be implemented by the classical computer 5 are shown on the left. However, some of the steps may need to be performed by both the classical and the quantum computers, and some steps may be performed by either.

In step E1, a target gate $\tilde{U}_T$ is selected. The target gate can be a noise-free target gate (U) or a noisy target gate ($\tilde{U}_T$). The procedure of steps E1 to E6 can be repeated for each gate for which it is desired to tailor the noise.

At step E2, the quantum computer 3 is configured to implement a set $\left\{\tilde{U}_i\right\}_{i=0}^{N_M}$ of noisy gate-variants $\tilde{U}_i$ limited to variants of the noise-free target gate (U) or the noisy target gate ($\tilde{U}_T$) with a specified (or partially specified) noise model to be tailored, where $N_M + 1$ is the number of different variants and each variant is equivalent to the noise-free implementation of U followed or preceded by a noise channel. Each variant should have a different noise channel associated with it (if multiple gates have the same noise channel then some are redundant). The base set of the noisy gate-variants $\tilde{U}_i$ is restricted to variants of the noise-free target gate (U) or noisy target gate ($\tilde{U}_T$). These variants may have different error channels $\varepsilon_i$.

A non-limiting example of how to generate the noisy gate-variants is to consider gates implemented by a flexible sequence of pulses that are self-inverse. In this case, having one gate implemented by running the sequence of pulses forward and one implemented by running the sequence of pulses backward produces a useful set of noisy gate-variants known as Hidden Inverses, at least for certain types of gates. Note that if the forward sequence is A then B then C, then the backward sequence is C$^{-1}$ then B$^{-1}$ then A$^{-1}$. We generalise this procedure from applying only to Hermitian gates (Zhang *et al*) to applying to any gate equivalent to the exponentiation of a Hermitian and unitary (self-inverse) operator (P), i.e. e$^{i\theta P/2}$. In this generalised case as an alternative to reversing the order of operations one can simply change the pre-factor of the self-inverse operator in the exponent ($\theta$) by $\theta+2k\pi$ and/or $\theta-2k\pi$ for k some integer. We can produce variants with more general noise models by replacing $\theta$ by $\theta+ \phi$ for any $\phi$ we desire.

In addition to, or instead of, multiple hardware implementations, it is possible to use multiple compilations. That is, a given gate is decomposed in a number of different ways into some 'base', 'native' or other compiled gates, and there will generally be several possible compilations, and these might be expected to have different noise models. A mixture of different hardware implementations and different compilations may be used. Other examples include using alternating sets of the target gate and its inverse, or using repeated iterations of the target gate.

At step E3, the quantum computer 3 is configured to characterise each noisy gate-variant $\tilde{U}_i$ by determining its corresponding noise channel $\varepsilon_i$. For example, the characterisation could be carried out using a tomography technique such as gate set tomography. In general, the quantum computer 3 characterises the noise model of a gate by doing many runs and looking at how the gate behaves depending on different inputs or circuit configurations. The characterisation could also be done in a different way. For example, the noise model could be determined by performing a classical simulation of the gates on the classical computer 5.

It is useful to express the noise channels $\left\{\varepsilon_i\right\}_{i=0}^{N_M}$ associated with the set $\left\{\tilde{U}_i\right\}_{i=0}^{N_M}$ of noisy gate-variants as error transfer matrices. The error transfer matrix $\hat{T}_\varepsilon$ associated to the noise channel $\varepsilon$ defines the action of the channel on the Pauli operators, it has elements defined by:

$$\left(\hat{T}_\varepsilon\right)_{i,j} = \frac{1}{2^{N_Q}}\text{Tr}\left[P_i\varepsilon\left(P_j\right)\right] \qquad (1)$$

where *i* is the row number, *j* is the column number, $N_Q$ is the number of qubits involved in the noise channel, Tr is the matrix trace, $P_i \in \{I, X, Y, Z\}^{\otimes N_Q}$ is the ith Pauli operator and $\varepsilon(P_j)$ is the output when the Pauli matrix $P_j$ passes through the noise

channel $\varepsilon$. By convention, $P_0$ is set to be equal to the identity operator (I).

The set $\left\{\widetilde{U}_i\right\}_{i=0}^{N_M}$ of noisy gate-variants $\widetilde{U}_i$ are thus noisy copies of the target gate $\breve{U}_T$ or U, associated with the following error transfer matrices $\hat{T}_{\varepsilon i}$:

$$\hat{T}_{\tilde{U}_i} = \hat{T}_{\varepsilon_i}\hat{T}_U \qquad (2)$$

where $\hat{T}_{\tilde{U}_i}$ and $\hat{T}_{\varepsilon i}$ are the transfer matrices of the noise-free component and error channel associated with the noisy gate-variant $\tilde{U}_i$ (i.e. the ith variant of the noise-free target gate (U) or the noisy target gate ($\tilde{U}_T$)) respectively and $\hat{T}_U$ is the transfer matrix associated to an ideal noiseless gate U.

At step E4, the classical computer 5 is configured to determine a linear combination of the noise channels $\varepsilon_i$ that is equivalent to a tailored noise channel $\varepsilon_T$ of interest.

In particular, the classical computer 5 is configured to determine a quasi-stochastic combination of the noisy gate-variants $\tilde{U}_i$ such that the end result is a version of the desired gate. That is, the classical computer 5 determines a linear combination of the transfer matrices $\hat{T}_{\tilde{U}_i}$ of the noisy gate-variants $\tilde{U}_i$ such that the desired gate is associated with a tailored noise channel of interest:

$$\sum_{i=0}^{N_M} c_i\,\hat{T}_{\tilde{U}_i} = \left(\sum_{i=0}^{N_M} c_i\hat{T}_{\varepsilon_i}\right)\hat{T}_U = \hat{T}_{\varepsilon_T}\hat{T}_U \qquad (3)$$

where the middle expression has been factorised by the transfer matrix $\hat{T}_U$ of the noiseless ideal gate $U$ and where $\hat{T}_{\varepsilon_T}$ is the transfer matrix of the tailored noise channel of interest. It is to be noted that the error channel can be modelled as being before or after the ideal gate, though the error transfer matrices and coefficients may be different. That is, $\hat{T}_{\varepsilon_1}\hat{T}_U = \hat{T}_U\hat{T}_{\varepsilon_2}$ but in general $\varepsilon\hat{T}_{\varepsilon_1} \neq \hat{T}_{\varepsilon_2}$ unless the noise channel commutes with the gate. For convenience and without any loss of generality, the error channel in the above formulation is shown to act after the gate, but the method works equally well for error channels before the gate.

Equation (3) implies equality between the weighted sum of the error transfer matrices $\hat{T}_{\varepsilon i}$ and the transfer matrix $\hat{T}_{\varepsilon_T}$ of the tailored noise channel of interest:

$$\sum_{i=0}^{N_M} c_i\hat{T}_{\varepsilon_i} = \hat{T}_{\varepsilon_T} \qquad (4)$$

According to Eq. (1), an $N_Q$-qubit noise channel is associated with matrices of size $4^{N_Q} \times 4^{N_Q}$ (i.e. one element for each pair of Pauli operators). Thus, Eq. (4) represents $4^{2N_Q}$ equations, although in practice some of the equations may not be linearly independent, resulting in fewer equations to solve.

Equation (4) can be reformulated in terms of the following matrix equation:

$$\sum_{i=0}^{N_M} c_i(A)_{k,i} = (t)_k \qquad (5)$$

where $(A)_{k,i}$ and $(t)_k$ reperesents the elements of the transfer matrices $\hat{T}_{\varepsilon i}$ and $\hat{T}_{\varepsilon_T}$ respectively, in the following manner:

$$(A)_{k,i} = \left(\hat{T}_{\varepsilon_i}\right)_{\left\lfloor\frac{k}{4^{N_Q}}\right\rfloor, k \bmod 4^{N_Q}} \quad (t)_k = \left(\hat{T}_{\varepsilon_T}\right)_{\left\lfloor\frac{k}{4^{N_Q}}\right\rfloor, k \bmod 4^{N_Q}} \qquad (6)$$

The symbols ' $\lfloor \cdots \rfloor$ ' and 'mod' denote the floor function and the modulo operation respectively. Thus, $\left\lfloor\frac{k}{4^{N_Q}}\right\rfloor$ takes as input the real number $\frac{k}{4^{N_Q}}$ and gives as output the greatest integer less than or equal to $\frac{k}{4^{N_Q}}$, whereas $k$ mod

$4^{N_Q}$ gives as output the remainder of k divided by $4^{N_Q}$.

Equation (5) is a matrix equation where all the elements are gathered into a single matrix, the i index refers to the noisy gate-variants $\tilde{U}_i$ and the k index $(0 \leq k < 4^{2N_Q})$ refers to the element of the matrix. Equation (5) can be formulated in an equivalent way as follows:

$$A\vec{c} = \vec{t} \tag{7}$$

where A represents the matrix of elements $(A)_{k,i}$, $\vec{c}$ represents the vector of the coefficients $c_i$, and $\vec{t}$ is a target vector representing the elements $(t)_k$.

The classical computer 5 is configured to determine the linear combination of the noise channels $\varepsilon_i$ that is equal to the tailored noise channel $\varepsilon_T$ of interest by calculating the vector $\vec{c}$ of coefficients $c_i$. The solution depends on the original error transfer matrices $\hat{T}_{\varepsilon_i}$ and the nature of the transfer matrix $\hat{T}_{\varepsilon_T}$ of the tailored noise channel $\varepsilon_T$ of interest.

It is not necessary to specify every possible element of the tailored transfer matrix $\hat{T}_{\varepsilon_T}$, some elements can be left free. In this case, for each k corresponding to an element that has been left free, the corresponding elements of the target vector $\vec{t}$ and the corresponding row of the matrix A must be set to zero or deleted.

In addition, the classical computer 5 is configured to determine the set of linear coefficients $c_i$ in such a way that the sampling cost (i.e. the sum of the absolute values of the coefficients of the different implementations) is minimised.

For example, if it is not advantageous to match the target perfectly, or if it is not possible to match it perfectly, the deviation from the target can be minimised by optimising the vector $\vec{c}$ of coefficients with or without constraints on the vector $\vec{c}$, as follows:

$$\min_{\vec{c}} \left( \left| A\vec{c} - \vec{t} \right|^2 \right) \tag{8}$$

At step E5, when the noise-free target gate ($U$) or noisy target gate ($\tilde{U}_T$) is to be used, the quantum computer 3 is configured to implement the set of noisy gate-variants according to the corresponding set of linear coefficients $c_i$ computed by the classical computer 5. Each noisy gate-variant $\tilde{U}_i$ is executed on the quantum computer 3 with a probability related to the corresponding coefficient $c_i$. This is equivalent to implementing the mitigated or Tailored gate $\tilde{U}_M$, where $\hat{T}_{\tilde{U}_M} = \hat{T}_{\varepsilon_T}\hat{T}_U$ is the transfer matrix of the effective mitigated gate.

Note that each implemented circuit may have multiple mitigated gates and therefore multiple sets of $c_i$ values to be accounted for. At the end of each run of the circuit, each of which will, in general, use different sets of gates ($\tilde{U}_i$ for each target $U$ or $\tilde{U}_T$), a quantum measurement of a chosen observable ($\hat{O}$) should be performed giving the value $\langle\hat{O}\rangle_n$ for the nth run. Each run has an associated linear coefficient and each mitigated gate contributes a sign and a sampling cost to the linear coefficient for each run and all these signs and sampling costs are multiplied together to get the final linear coefficient ($C_n$) for each run ($n$). Note that the final linear coefficient ($C_n$) is referenced by a capital "C".

At step E6, the classical computer 5 is configured to calculate a weighted sum of all the measured outcomes ($\langle\hat{O}\rangle_n$) for all the runs of the circuit. The weighted sum represents an effective measurement outcome

$$\langle\hat{O}\rangle_M = \frac{\sum_{n=0}^{N_R} C_n\langle\hat{O}\rangle_n}{N_R}$$

of a circuit consisting of gates with the specifically tailored noise channels of interest ($N_R$ is the number of runs/repeats of the circuit and the larger it is the lower the uncertainty in the result). In fact, the quasi-stochastic combination according to the calculated coefficients cancels out the unwanted noise bits, leaving only the specifically tailored noise $\varepsilon_T$ of interest (which may differ for each gate in the circuit).

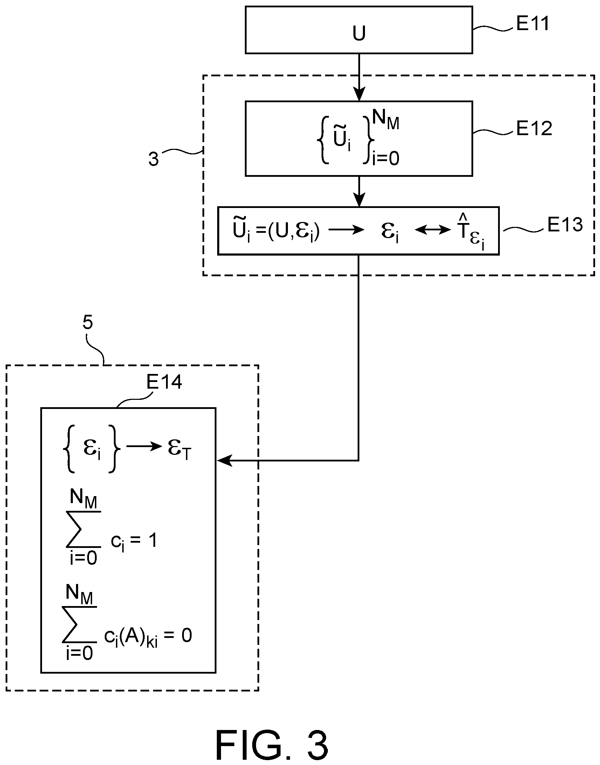

Figs. 3-5 are flowcharts illustrating specific preferred embodiments of the present invention. All these embodiments include steps similar to steps E5 and E6 of Fig. 2. These steps are not shown or reviewed for simplicity and conciseness.

In particular, Fig. 3 is a flowchart schematically representing the steps realised by the computing system of Fig. 1, according to a second preferred embodiment of the present invention.

This second embodiment is more specific than the first. It uses local cancellations to produce a gate that has only Pauli noise from a set of hardware instantiations of a desired target gate $\tilde{U}_T$. In this case there is no need to pre-specify the exact form of the target noise. It is sufficient to note that the off-diagonal elements of the noise should be zero. We require a set of noisy gate-variants $\left\{\tilde{U}_i\right\}_{i=0}^{N_M}$. If these gates have non-Pauli noise, then this procedure can be used to obtain a gate that looks like the noise-free gate $U$ followed by a Pauli noise channel.

In particular, at step E11, the noise free component of a desired target gate $U$ is selected.

At step E12, the quantum computer 3 is configured to implement a set $\{\widetilde{U}_i\}_{i=0}^{N_M}$ of noisy gate-variants, each with different error channels ($\varepsilon_i$) but the same noise-free component ($U$).

At step E13, the quantum computer 3 is configured to characterise each noisy gate-variant $\tilde{U}_i$ by determining its corresponding noise channel $\varepsilon_i$ associated with a corresponding error transfer matrix $\hat{T}_{\varepsilon_i}$.

At step E14, the classical computer 5 is configured to determine a linear combination of the noise channels $\varepsilon_i$ that is equivalent to a specific tailored noise channel $\varepsilon_T$ of interest. This specific tailored noise channel $\varepsilon_T$ is a stochastic noise channel and more specifically a Pauli noise channel. It is represented by a tailored error transfer matrix $\hat{T}_{\varepsilon_T}$ whose off-diagonal elements are all zero but whose diagonal elements can be left unspecified.

The coefficients can be determined by solving the equations (4) or (5). However, instead of finding coefficients to solve all the equations, the computation can be restricted to just solving the equations of the off-diagonal elements.

In that case, the number of the off-diagonal elements in the error transfer matrices $\hat{T}_{\varepsilon_i}$ is $N = 4^{N_Q}(4^{N_Q} - 1)$. Therefore, for $0 \le k \le N$ and for each noisy gate-variant $\tilde{U}_i$, the corresponding elements $(A)_{k,i}$ and $(t)_k$ of the matrix A and the target vector $\vec{t}$ are, respectively, as the first diagonal element is also included for normalisation :

$$(A)_{k,i} = \left(\hat{T}_{\varepsilon_i}\right)_{\left\lfloor\frac{k-1}{4^{N_Q}-1}\right\rfloor,\left(\left\lfloor\frac{k-1}{4^{N_Q}-1}\right\rfloor+k-\left(4^{N_Q}-1\right)\left\lfloor\frac{k-1}{4^{N_Q}-1}\right\rfloor\right)\bmod 4^{N_Q}} \tag{9}$$

$$(t)_k = \delta_{k0}$$

where $(A)_{k,i}$ is the kth off-diagonal element of the error transfer matrix $\hat{T}_{\varepsilon_i}$ of the noise channel $\varepsilon_i$ corresponding to the ith noisy gate-variant $\tilde{U}_i$. Note that the absolute value within the floor function is required to incorporate the normalisation term for k=0 ($(A)_{0,i}$ = 1). We extract the following elements: {0,0}, {0,1}, {0,2}, {0,3}, ..., {0, $4^{N_Q}$ - 1}, {1, 2}, ..., {1, $4^{N_Q}$ - 1}, {1, 0}, {2, 3}, ..., {2, $4^{N_Q}$ - 1}, {2, 0}, {2, 1}, ..., {$4^{N_Q}$ - 1, 0}, {$4^{N_Q}$ - 1, $4^{N_Q}$ - 2} of $\hat{T}_{\varepsilon_i}$ for each $i$. $\delta_{k0}$ is the Kronecker delta so $\delta_{00}$ = 1, $\delta_{k0}$ = 0 for $k$>0.

A trivial solution with all coefficients equal to zero is avoided. This is because $(A)_{0,i}$ and $(t)_0$ encode the normalisation condition. For every $(A)_{k,i}$ belonging to the set $\left\{(A)_{k,i}\right\}_{k=0}^{N}$, the classical computer 5 is configured to solve the following set of equations:

$$\sum_{i=0}^{N_M} c_i\,(A)_{0,i} = \sum_{i=0}^{N_M} c_i = 1 \tag{10}$$

$$\sum_{i=0}^{N_M} c_i\,(A)_{k,i} = 0 \text{ for } k > 0 \tag{11}$$

Equation (10) concerns the case where k=0, knowing that the upper left element of the transfer matrix of any physical noise channel is one, otherwise it is not trace preserving. If the error channels are not trace preserving this approach will also work but the second equality of Eq. (10) will not hold, we have instead: $\sum_{i=0}^{N_M} c_i\,(A)_{0,i} < 1$.

Solving only the equations of the off-diagonal elements has the advantage of requiring fewer coefficients and does not pose a problem if some of the equations to be solved are linearly dependent.

An additional advantage is that in some cases it is possible to use coefficients that are true probabilities (not quasi-probabilities). Thus, in certain circumstances (e.g. when there is only one off-diagonal element that has a different sign for each pair of noisy gates and every off-diagonal element has at least one variant with each of the two possible signs) tailoring can be implemented without sampling costs.

The solutions of the above equations result in a configuration of quasi-probabilities $c_i$ (where $\sum|c_i|$ = 1) associated with the corresponding noisy gate-variants $\tilde{U}_i$,

On the other hand, if $\sum_{i=0}^{N_M}|c_i| > 1$ is sufficiently small (the acceptable size will depend on the time available for implementing the mitigation, the larger this term is the longer the mitigation will take to implement), the configuration of the pseudo probabilities $c_i$ is acceptable because it does not noticeably reduce the effectiveness of the method.

Thus, according to this embodiment, the quantum computer 3 is configured to implement the set $\{\widetilde{U}_i\}_{i=0}^{N_M}$ of the noisy gate-variants such that the sum of the modulus of the linear coefficients $c_i$ is equal to unity or that the sum of the modulus of their linear coefficients ($\sum_{i=0}^{N_M}|c_i|$) is minimal.

The classical computer 5 is configured to restrict the solution of the target equations ($\hat{T}_{\varepsilon T}$) to have only diagonal elements. This allows general noise to be converted to Pauli noise without solving all the equations (4), those relating to the diagonal elements can be ignored.

It should be noted that steps E12 to E14 could be performed iteratively increasing the number ($N_M$) of noisy gate-variants each time until a linear combination of noise channels equal to a specific tailored noise channel of interest with sufficiently low $\sum_{i=0}^{N_M}|c_i|$ is obtained.

For example, at first, a single variant $\tilde{U}_0$ of the target gate $\tilde{U}_T$ is produced and characterised. If the corresponding error transition matrix $\hat{T}_{\varepsilon 0}$ has no off-diagonal elements, then a single probability coefficient is set to one (i.e. $c_0 = 1$) and the procedure is finished. Otherwise (i.e. if the error transition matrix $\hat{T}_{\varepsilon 0}$ of the first implementation $\tilde{U}_0$ has off diagonal elements), then a second implementation $\tilde{U}_1$ of the noisy target gate $\tilde{U}_T$ is produced and characterised by tomography on the quantum computer 3 or by some other method, for instance by simulating the gates classically to determine the noise.

The set of noisy gate-variants now consists of two noisy gate-variants $\{\tilde{U}_0, \tilde{U}_1\}$. So, the classical computer 5 tries to solve the equations in step E14. If the equations cannot be solved, an additional implementation $\tilde{U}_2$ is created and characterised. The set of noisy gate-variants now consists of three gate-variants $\{\tilde{U}_0, \tilde{U}_1, \tilde{U}_2\}$ and the same procedure is repeated until either the equations are solved or the number of noisy gate-variants (with linearly independent error transition matrices) $\hat{T}_{\varepsilon i}$ is equal to $4^{N_Q}(4^{N_Q} - 1) + 1$ (i.e. one more than the number of off-diagonal elements, to account for normalisation).

If, at any point during the above procedure, there exists a set of noisy gate-variants with error transition matrices $\hat{T}_{\varepsilon i}$ that are linearly dependent, when their diagonal elements are neglected, then the noisy gate-variant with the smaller magnitude diagonal elements in its error transition matrix ($\hat{T}_{\varepsilon i}$) can be removed from the set of noisy gate-variants, since it adds nothing to the procedure.

Advantageously, using knowledge of the correlation between hardware parameters and noise models could speed up this process considerably and allow noise channels to be tailored as required.

Below are some examples of producing a gate with only Pauli noise from a noisy target gate $\tilde{U}$ as per the second embodiment.

The first example concerns the tailoring of a noisy Pauli X-gate with an over-rotation error, hereafter referred to as a 'forward X-gate'. The noise channel is represented by the following error transition matrix:

$$\hat{T}_\theta = \begin{pmatrix} 1 & 0 & 0 & 0 \\ 0 & 1 & 0 & 0 \\ 0 & 0 & \cos\theta & \sin\theta \\ 0 & 0 & -\sin\theta & \cos\theta \end{pmatrix} \qquad (12)$$

Applying an implementation of this forward X-gate is equivalent to applying a noise-free Pauli X-gate followed by the above error transition matrix. A noiseless Pauli X-gate is self-inverse (i.e. equal to its own inverse). Therefore, when the forward X-gate is inverted, the over-rotation error is expected to change direction. That is, the noise on the inverse of the forward X-gate is expected to be represented by an error transition matrix $\hat{T}_{-\theta}$ whose off-diagonal elements are opposite to those of the above matrix $\hat{T}_\theta$, as follows:

$$\hat{T}_{-\theta} = \begin{pmatrix} 1 & 0 & 0 & 0 \\ 0 & 1 & 0 & 0 \\ 0 & 0 & \cos\theta & -\sin\theta \\ 0 & 0 & \sin\theta & \cos\theta \end{pmatrix} \qquad (13)$$

The noise-free Pauli X-gate followed by an error transition matrix $\hat{T}_{-\theta}$ is denoted a noisy Pauli X-gate with an under-rotation error (hereafter referred to as a 'backward X-gate'). Thus, if the forward X-gate is applied fifty percent of the time and the backward X-gate is applied fifty percent of the time, a diagonal error transition matrix representing a Pauli noise channel is obtained:

$$\frac{1}{2}\hat{T}_\theta + \frac{1}{2}\hat{T}_{-\theta} = \begin{pmatrix} 1 & 0 & 0 & 0 \\ 0 & 1 & 0 & 0 \\ 0 & 0 & \cos\theta & 0 \\ 0 & 0 & 0 & \cos\theta \end{pmatrix} \qquad (14)$$

In this case the sampling cost ($C_S$, is the sum of the modulus of the coefficients of the two implementations) is unity: $C_S$ = 1/2 + 1/2 = 1, so there is no need to sample more than in the untailored case.

The second example concerns the tailoring of a noisy gate with an over-rotation error around the Z-axis (such as the T-gate). Its noise channel is represented by the following error transition matrix $\hat{T}_{Z,\theta}$:

$$\hat{T}_{Z,\theta} = \begin{pmatrix} 1 & 0 & 0 & 0 \\ 0 & \cos\theta & \sin\theta & 0 \\ 0 & -\sin\theta & \cos\theta & 0 \\ 0 & 0 & 0 & 1 \end{pmatrix} \qquad (15)$$

Applying an implementation of this noisy gate is equivalent to applying a noise-free gate followed by the above error transition matrix $\hat{T}_{Z,\theta}$.

If this gate is not self-inverse, then it may not be straightforward to produce an implementation with equal and opposite rotation errors. However, it is possible to produce a gate implementation with a different angle of rotation error by adjusting some of the control parameters (e.g. the order or duration of the pulses) to obtain the following error transition matrix $\hat{T}_{Z,\phi}$:

$$\hat{T}_{Z,\phi} = \begin{pmatrix} 1 & 0 & 0 & 0 \\ 0 & \cos\phi & \sin\phi & 0 \\ 0 & -\sin\phi & \cos\phi & 0 \\ 0 & 0 & 0 & 1 \end{pmatrix} \qquad (16)$$

In this case, equations (10) and (11) in step E14 of the flowchart in Fig. 3 are simplified to: $c_1 + c_2 = 1$, $c_1 \sin\theta + c_2 \sin\phi = 0$ (since all the other equations are either proportional to one of these or identically zero).

These equations have a unique solution:

$$c_1 = \frac{-\sin\phi}{\sin\theta - \sin\phi}, \qquad c_2 = \frac{\sin\theta}{\sin\theta - \sin\phi}, \qquad (17)$$

where it is assumed, without loss of generality, that $|\phi| \le |\theta|$. This leads to the following effective error transition matrix:

$$c_1 \hat{T}_{Z,\theta} + c_2 \hat{T}_{Z,\phi} \qquad (18)$$
$$= \begin{pmatrix} 1 & 0 & 0 & 0 \\ 0 & \dfrac{\sin(\theta - \phi)}{\sin\theta - \sin\phi} & 0 & 0 \\ 0 & 0 & \dfrac{\sin(\theta - \phi)}{\sin\theta - \sin\phi} & 0 \\ 0 & 0 & 0 & 1 \end{pmatrix}$$

Now this procedure is stochastic (i.e. the coefficients, $c_1$ and $c_2$, define a probability distribution) only when $\theta\phi \le 0$. Therefore, it may be useful to attempt to design such gates. In particular, if $\theta = -\phi$, then the effective transition matrix has just cosine terms and unity on the diagonal as in the previous example.

The sampling cost $C_S$ is given by:

$$C_S = |c_1| + |c_2| = \frac{|\sin\phi| + |\sin\theta|}{|\sin\theta - \sin\phi|} \qquad (19)$$

So the sampling cost $C_S$ grows as the angles get closer if they are in the same direction, but if $\theta\phi \le 0$ then, the

sampling cost $C_S$ is unity.

Another example concerns the tailoring of a noisy Y-gate constructed from an X-gate and a Z-gate, each of which has over-rotation and under-rotation variants. In this case, a 'twirled' Y-gate (i.e. one with only Pauli noise) can be produced using the following stochastic sum: ¼ ($X_+Z_+ + X_-Z_+ + X_+Z_- + X_-Z_-$) where the sub-script + or - indicates the presence of an over-rotation error or an under-rotation error, respectively. This is equivalent to $Y_T = X_T Z_T$, where $X_T = ½ ( X_+ + X_-)$ and $Z_T = ½ ( Z_+ + Z_-)$.

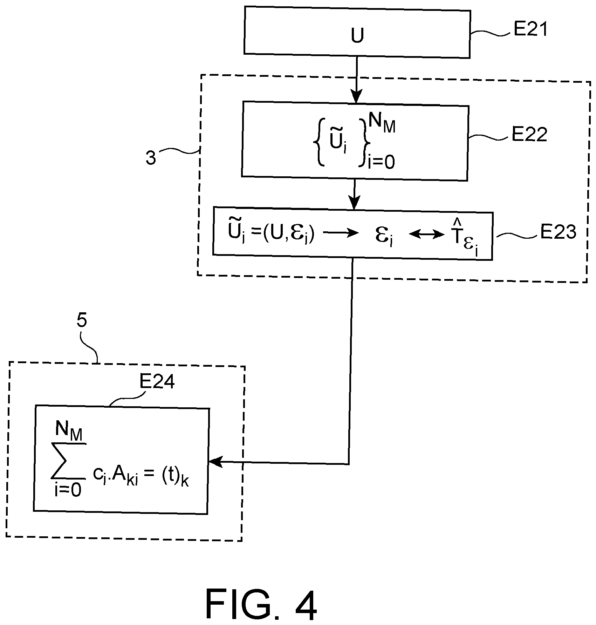

Fig. 4 is a flowchart schematically representing the steps realised by the computing system of Fig. 1, according to a third preferred embodiment of the present invention.

This third embodiment is more specific than the first two. It proposes to mitigate errors completely, i.e. to obtain an error channel whose transfer matrix is equal to the identity. Steps E21 to E23 are equivalent to steps E1 to E3 in Fig. 2 or to steps E11 to E13 in Fig. 3.

At step E21, a desired noise-free target gate (U) is selected.

At step E22, the quantum computer 3 is configured to implement a set $\{\tilde{U}_i\}_{i=0}^{N_M}$ of noisy gate-variants of the noise-free target gate (U) to be tailored.

At step E23, the quantum computer 3 is configured to characterise each noisy gate-variant $\tilde{U}_i$ by determining its corresponding noise channel $\varepsilon_i$. Each noise channel $\varepsilon_i$ is associated with a corresponding error transfer matrix $\hat{T}_{\varepsilon_i}$.

At step E24, the classical computer 5 is configured to determine a linear combination of the noise channels $\varepsilon_i$ corresponding to a specific tailored noise channel $\varepsilon_T$ of interest. Step E24 differs from step E14 in Fig. 3 in that the tailored noise channel of interest is a noise-free channel corresponding to a target error transfer matrix $\hat{T}_{\varepsilon_T}$ equal to the identity (I). That is, Eq. (3) becomes:

$$\sum_{i=0}^{N_M} c_i \hat{T}_{\tilde{U}_i} = \left(\sum_{i=0}^{N_M} c_i \hat{T}_{\varepsilon_i}\right)\hat{T}_U = \hat{T}_{\varepsilon_T}\hat{T}_U = I\hat{T}_U = \hat{T}_U \qquad (20)$$

Replacement of $\hat{T}_{\varepsilon_T}$ in Eq. (6) by the identity (I) gives:

$$(t)_k = (I)\Big|_{\left\lfloor\frac{k}{4^{N_Q}}\right\rfloor, k \bmod 4^{N_Q}} = \delta\Big|_{\left\lfloor\frac{k}{4^{N_Q}}\right\rfloor, k \bmod 4^{N_Q}} \qquad (21)$$

Therefore, the equations (5) to be solved become:

$$\sum_{i=0}^{N_M} c_i (A)_{k,i} = (t)_k = \delta\Big|_{\left\lfloor\frac{k}{4^{N_Q}}\right\rfloor, k \bmod 4^{N_Q}} \qquad (22)$$

Any completely positive trace preserving (CPTP) channel will have the first row equal to unity followed by zeros. A number of equations may end up being identical or linearly dependent. If the left-hand sides of the equations (22) relating to the diagonal elements are linearly dependent, there is no solution because the right-hand sides of the equations relating to the diagonal elements are always equal to one. However, if the equations relating to the off-diagonal elements are linearly dependent, then it is sufficient to include one of the linearly dependent sets, since the right-hand side is zero. In practice, it is sufficient to solve $N_M + 1$ equations requiring $N_M + 1$ different manifestations of the noisy gate, where $N_M$ satisfies the following inequality:

$$0 \le N_M \le 4^{N_Q}(4^{N_Q} - 1) \qquad (23)$$

A subset of the equations may be linearly dependent. Again, linear dependence between diagonal elements means the problem is insolvable, and linear dependence between off-diagonal elements reduces the number of implementations $N_M$ required. Once any linear dependencies removed, we are left with a set of $N_M$ equations which the classical computer 5 can solve by matrix inversion or other methods of linear algebra.

All of the above three embodiments solve the same equations, but with different target vectors.

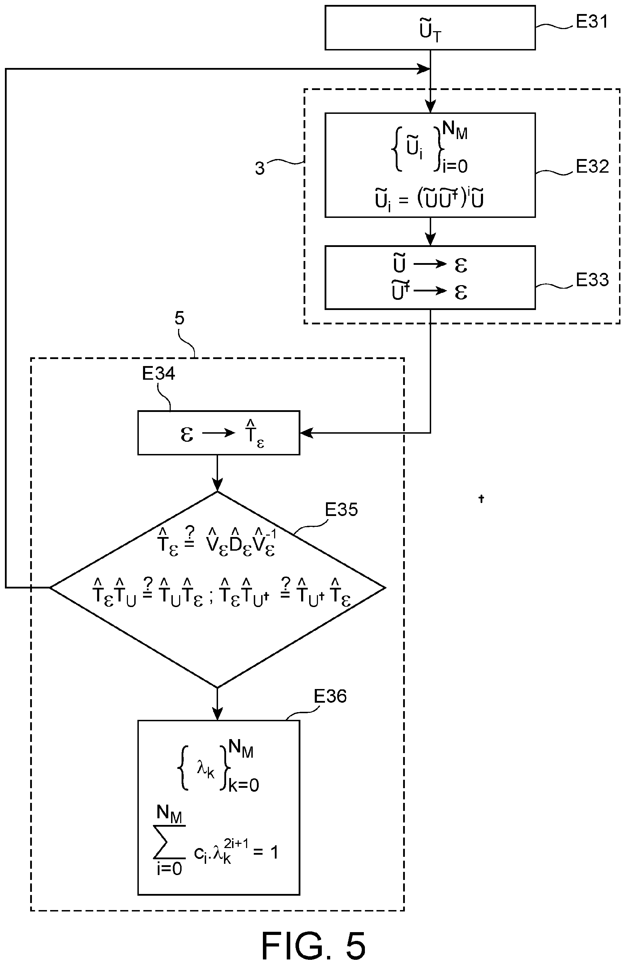

Fig. 5 is a flowchart schematically illustrating the steps performed by the computing system of Fig. 1 according to a fourth preferred embodiment of the present invention.

This fourth embodiment is designated Extremely Local Mitigation (ELM), because it only requires a single implementation of the target gate if the target gate is Hermitian. It is a special case of the third, where, if some specific properties are satisfied, the solution becomes much simpler. The mitigation is limited to a single noisy instantiation of the

target gate ($\tilde{U}$) and its noisy inverse ($\widetilde{U^{\dagger}}$, which has the noise free component $U^{\dagger}$ and an error channel that commutes with that of $\tilde{U}$, but the error channels cannot be inverses of each other), which may be the same gate if the noise free component of the target gate (U) is Hermitian. The concept behind this embodiment is to use identity insertion and knowledge of the noise model to perform unbiased probabilistic error cancellation. The cancellation is implemented using only repeated applications of the target gate and its noisy inverse. The number of required iterations and their coefficients can be found by optimisation or analytically.

According to this embodiment, it is assumed that one has access to the target gate and its inverse and that they have the same error channel (or that their error channels commute). It is further assumed that the noise channel commutes with the target gate and its inverse. Similar reasoning holds if we have multiple target gate instances whose noise channels are diagonalised in the same basis. Provided we have sufficient distinct instances of the gates, the requirement that the noise channel commute with these instances can be relaxed.

At step E31, a target gate to mitigate (U) is selected.

At step E32, the quantum computer 3 is configured to implement a set $\{\widetilde{U}_i\}_{i=0}^{N_{\mathrm{M}}}$ of noisy gate-variants by using only repeated applications of the target gate to be mitigated and its inverse. That is, each $\tilde{U}_i$ is equal to $\left(\widetilde{U}\widetilde{U^{\dagger}}\right)^i \widetilde{U}$. If U (the noise free component of $\tilde{U}$ and $\tilde{U}_i$) is a Hermitian matrix ($U^{\dagger} = U$), there is no need to produce an explicit inverse gate, we can use $\tilde{U}_i = \tilde{U}^{2\,i+1}$.

At step E33, the quantum computer 3 (or the classical computer 5) is configured to characterise the original noisy gate $\tilde{U}$ and its noisy inverse $\widetilde{U^{\dagger}}$ (if it is not Hermitian) by determining their corresponding noise channels. In fact, $\tilde{U}$ and $\widetilde{U^{\dagger}}$ are assumed to have the same noise channel $\varepsilon$, though the procedure can easily be generalised to the case where the transfer matrices of the two noise channels are not the same but can be diagonalised in the same basis (i.e. when the two noise channels and their transfer matrices commute) as long as the error channels are not inverses of each other.

In step E34, the classical computer 5 is configured to construct a transfer matrix $\hat{T}_{\varepsilon}$ representing the noise channel of both $\tilde{U}$ and $\widetilde{U^{\dagger}}$.

Step E35 is a test to check whether the error transfer matrix $\hat{T}_{\varepsilon}$ is diagonalisable and whether it commutes with the transfer matrix $\hat{T}_U$ of the noiseless ideal gate $U$ as well as with the transfer matrix $\hat{T}_{U^{\dagger}}$ of the inverse ideal gate $U^{\dagger}$.

The error transfer matrix $\hat{T}_{\varepsilon}$ is said to be diagonalisable if the following equation is verified:

$$\hat{T}_{\varepsilon} = \hat{V}_{\varepsilon}\hat{D}_{\varepsilon}\hat{V}_{\varepsilon}^{-1} \qquad (24)$$

where $\hat{V}_{\varepsilon}$ is a full rank matrix, i.e. invertible; $\hat{D}_{\varepsilon}$ is a diagonal matrix of the eigenvalues of the error transfer matrix $\hat{T}_{\varepsilon}$.

Furthermore, the error transfer matrix $\hat{T}_{\varepsilon}$ is said to commute with the transfer matrices $\hat{T}_U$ and $\hat{T}_{U^{\dagger}}$ corresponding to the ideal gate $U$ and its inverse $U^{\dagger}$, respectively, if the following equations are verified:

$$\hat{T}_{\widetilde{U}} = \hat{T}_{\varepsilon}\,\hat{T}_U = \hat{T}_U\hat{T}_{\varepsilon};\ \hat{T}_{\widetilde{U^{\dagger}}} = \hat{T}_{\varepsilon}\,\hat{T}_{U^{\dagger}} = \hat{T}_{U^{\dagger}}\,\hat{T}_{\varepsilon} \qquad (25)$$

where $\hat{T}_{U^{\dagger}}\hat{T}_U = \hat{T}_U\hat{T}_{U^{\dagger}} = \mathrm{I}$.

If the result of the test in step E35 is negative, then this method will not work for the noisy gate $\tilde{U}$ and there will be a loop back to step E32 to try a different hardware implementation of the gate $\tilde{U}$ and/or its inverse $\widetilde{U^{\dagger}}$, with different error channels.

However, if the result of the test in step E35 is positive, then the mitigated gate is defined as in Eq. (4), except that the different variants of the noisy gate-variants are created using identity insertion, as follows:

$$\hat{T}_{\widetilde{U}_i} = \hat{T}_{\widetilde{U}}\left(\hat{T}_{\widetilde{U^{\dagger}}}\hat{T}_{\widetilde{U}}\right)^i = \hat{T}_{\widetilde{U}}\hat{T}_{\varepsilon}^{\,2i+1} \qquad (26)$$

From the above equation it follows that:

$$\hat{T}_{\varepsilon_i} = \hat{T}_\varepsilon^{\,2i+1} \qquad\qquad (27)$$

Alternating the noisy gate and its noisy inverse results in the noise free components cancelling each other out, resulting in an amplified channel.

Substituting the above equation (27) into equation (4), with the target transition vector being the identity, gives:

$$I = \sum_{i=0}^{N_M} c_i \hat{T}_\varepsilon^{\,2i+1} = \sum_{i=0}^{N_M} c_i \left(\hat{V}_\varepsilon \hat{D}_\varepsilon \hat{V}_\varepsilon^{-1}\right)^{2i+1} = \hat{V}_\varepsilon \left(\sum_{i=0}^{N_M} c_i \hat{D}_\varepsilon^{\,2i+1}\right) \hat{V}_\varepsilon^{-1} \qquad\qquad (28)$$

From the above equation (28) the following can be deduced:

$$\sum_{i=0}^{N_M} c_i \hat{D}_\varepsilon^{\,2i+1} = I \qquad\qquad (29)$$

The advantage is that there are only $4^{N_Q}$ equations at most as compared to $4^{2N_Q}$ in the most general case. They are always solvable, provided that none of the eigenvalues are zero valued.

At step E36, the classical computer 5 is configured to determine a set $\{\lambda_k\}_{k=0}^{N_M}$ of distinct eigenvalues of the error transfer matrix $\hat{T}_\varepsilon$ where $N_M$ is equal to the number of unique eigenvalues of $\hat{T}_\varepsilon$ minus one.

Furthermore, the classical computer 5 is configured to determine the linear coefficients $c_i$ by solving the following set of eigenvalue equations:

$$\sum_{i=0}^{N_M} c_i \lambda_k^{2i+1} = 1 \qquad\qquad (30)$$

The coefficients $c_i$ are determined as an analytic function of the eigenvalues of the noise channel, as follows:

$$c_i = (-1)^i \sum_{j=0}^{N_M} \frac{1}{\lambda_j} \frac{\sum_{0 \le m_1 < \cdots < m_{n-i} \le N_M : m_1, \cdots, m_{N_M-i} \ne j} \prod_{1 \le k \le N_M - i} \lambda_{m_k}^2}{\prod_{0 \le m \le N_M : m \ne j}(\lambda_m^2 - \lambda_j^2)}, \qquad\qquad (31)$$

$$c_{N_M} = \sum_{j=0}^{N_M} \frac{1}{\lambda_j} \frac{1}{\prod_{0 \le m \le N_M : m \ne j}(\lambda_j^2 - \lambda_m^2)}$$

Below is an example of the determination of coefficients in relation to a depolarising noise transfer matrix. The depolarising noise transfer matrix commutes with all gates and for a single qubit gate is given by:

$$\hat{T}_{\text{Depol},p} = \begin{pmatrix} 1 & 0 & 0 & 0 \\ 0 & 1 - \frac{4}{3}p & 0 & 0 \\ 0 & 0 & 1 - \frac{4}{3}p & 0 \\ 0 & 0 & 0 & 1 - \frac{4}{3}p \end{pmatrix}, \qquad\qquad (32)$$

The coefficients are determined according to the above equations as follows:

$$c_0 = -\frac{1}{2 - 4p + \frac{16}{9}p^2}, \qquad\qquad c_1 = \frac{3 - 4p + \frac{16}{9}p^2}{2 - 4p + \frac{16}{9}p^2}, \qquad\qquad (33)$$

The above coefficients have been determined without identity insertion (i=0) and with a single identity insertion (*i*=1) using Equation (31).

It follows that the resulting sampling cost is:

$$C_S = |c_0| + |c_1| = \frac{4 - 4p + \frac{16}{9}p^2}{2 - 4p + \frac{16}{9}p^2} = 2 + \frac{4p - \frac{16}{9}p^2}{2 - 4p + \frac{16}{9}p^2}, \tag{34}$$

This embodiment allows a high precision mitigation, since the remaining uncertainty is only due to the limitations in the measurement precision and the limitations in the number of repeated runs. It also removes the burden of optimisation, since the size of the basis set (2) and the linear coefficients ($c_i$) are entirely determined (analytically) by the noise channel.

Below are some methods of generating the noisy gate-variants according to the generalised procedure of changing the pre-factor of the self-inverse operator in the exponent ($\theta$) by $\theta$+2k$\pi$ and/or $\theta$-2k$\pi$ for k some integer.

The first method is designated Rotated Extremely Local Mitigation (RELM) which is a variant of ELM targeted at mitigating over-rotation errors. Here, we assume we have the ability to add additional controlled rotation error to the gate we wish to mitigate and then just apply the above described ELM procedure. So starting with a rotational error of $\phi$ we add an additional rotational error channel with a rotational error of $\theta$, in practice this may simply involve adjusting the control parameters of the hardware. The optimal additional rotational error is found to be $\theta = 2\pi/3$ in which case the sampling cost is:

$$C_S \approx 1 + 2\sqrt{3}|\phi|$$

This first method is relevant if characterisation is expensive so requiring characterisation of a single variant of the gate could still be a reasonable expectation. It is worth noting that this procedure works for rotations because they are periodic.

The second method is designated Controlled Local Mitigation (CLM) which moves away from the use of Identity Insertion and uses control of the noise model to obtain optimal mitigations. Here we assume we have the ability to modify the noise of every gate variant we wish to mitigate. The optimal tailored errors are given by:

$$\phi_i = \phi + \theta_i \text{ where } \theta_0 = 0;\ \theta_1 = \pi/2;\ \theta_2 = 3\pi/2$$

This method creates two additional gates. The first gate ($\phi_0 = \phi$) represents simply the original gate, the second gate ($\phi_1 = \phi + \pi/2$) represents the original gate with an extra rotation of $\pi/2$ and the third gate ($\phi_2 = \phi + 3\pi/2$) represents the original gate with an extra rotation of $3\pi/2$. In this case, the sampling cost is lower than that of the first method and is given by :

$$C_S \approx 1 + |\phi|$$

The length scale factor F, which corresponds to the number of additional gates that must be added to the circuit, is negligible and is given by:

$$F \approx 1 + 3|\phi|$$

So the CLM procedure is scalable for over-rotation errors.

The third method is designated Controlled Hidden-Inverse-assisted Local Mitigation (CHILM) which is a variant of CLM that makes use of Hidden Inverses designed to mitigate over-rotation errors. The upshot, of the inclusion of Hidden inverses, is that we can make use of more general angles $\phi_i$, since we are able to change the sign as well as the magnitude of the uncontrolled over-rotation $\phi$. The optimal over-rotations are thus given by:

$$\phi_0 = -\phi;\ \ \phi_1 = \pi + \phi\ \ ;\ \ \phi_2 = \phi$$

Which returns the following sampling cost and length scale factor:

$$C_S \approx 1 + \phi^2/2 \quad \text{and} \quad F \approx 1 + \phi^2/4$$

So the sampling cost and the length scale factor are an order of magnitude smaller than what can be achieved without using Hidden Inverses.

So far, the local quantum computing of the present invention has been applied to quantum gates, but this is not limiting and can also be applied to simpler quantum physical operations that compose quantum gates or circuits.

These could be effective rotations, reducing the energy separation between levels, or other coherent evolution. Each of these elementary physical operations will be subject to noise and have an effective noise channel that follows it. However, when these physical operations are concatenated to form a gate, the effective noise channel of the complete gate is generally more complicated than those of the individual components. The noise-free components of the elementary physical operations (needed for the gate) that alternate with their noise channels act on the noise channels that precede them and changes their effective form. This complicates the structure of the final noise channel, associated with the complete gate. This makes the noise harder to characterise and to mitigate than the noise associated with the individual components.

Thus, the present invention also proposes to decompose quantum circuits or gates into elementary physical operations and apply local characterisation, mitigation, and potentially error correction at the level of physical operations. We expect the noise channels associated with the elementary physical operations or processes to be much simpler than those associated with whole gates or complete circuits, and thus easier to characterise and mitigate. In some cases, the noise channel associated with a single gate may be so simple that no further decomposition is required, but the general protocol would be to perform a hardware-dependent decomposition in terms of the simplest possible elementary physical operations that a given hardware can implement. For example, these physical operations might correspond to the process of changing a single (or a small subset) of the parameters of the effective Hamiltonian that generates a particular gate, the switching on or off of an external field, a period of free evolution of the qubit, or a period of evolution under a static or dynamic external field.

According to one embodiment of the present invention, the quantum computer or device 3 is configured to implement in hardware a collection of elementary physical operations which could be concatenated to form a quantum circuit or gate. Moreover, as described with reference to Figs. 2-5, the quantum computer or device is configured to implement a set $\{\tilde{u}_i\}_{i=0}^{N_\mathrm{p}}$ of noisy physical operation-variants for each elementary noise-free physical operation and to characterise each noisy physical operation-variant by determining its corresponding elementary noise channel. Each physical operation-variant has the same noise-free component but a different elementary noise channel so as to form an non-trivial set. The elementary physical operations need not, but may, correspond to a recognisable quantum gate.

On the other hand, the classical computer 5 is configured to determine a linear combination of the elementary noise channels $\varepsilon_i$ that is equivalent to a tailored elementary noise channel $\varepsilon_\mathrm{T}$ of interest.

According to one aspect, the elementary physical operations form an efficient universal set of elementary physical-operations for quantum computing, in that a given collection of elementary physical operations can efficiently (i.e. with a polynomial overhead in the number of gates in the target circuit) represent any given quantum circuit at any precision, where the overhead associated with the increase in precision is polynomial in the inverse of the precision.

According to a variant, the elementary physical operations form an efficient complete set of elementary physical-operations for a specific purpose proposed for the quantum computer or device, in that a given collection of elementary physical operations can efficiently represent any given quantum circuit that is required for the execution of the specific purpose of the quantum computer or device to arbitrary precision, where the overhead associated with the increase in precision is polynomial in the inverse of the precision.

An example would be a physical architecture where we can implement some rotations given by Pauli Word operators, specifically: $S_1, S_2, T_3, Z,$ and $S_{15}$, which are rotations generated by $P_1 = X, P_3 = Z, P_3 = Z, P_3 = Z,$ and $P_{15} = Z_1 \otimes Z_2$ respectively (where $Z_1$ and $Z_2$ are $Z$ operators acting on distinct qubits). This set of elementary physical operations is complete since we can produce any gate by a combination of these. One common universal gate-set is T, H, and CNot (CX, the controlled not gate). T is already in our physical operation set and there is a decomposition of the Hadamard and CNot gates into elements of our physical operation set (up to global phases, which are irrelevant) such as $H = S_1 S_3 S_1$. The set $S_1, S_3, T_3, Z,$ and $S_{15}$ are expected to have much simpler noise models (close to Stochastic Over-Rotation noise, which is equivalent to a stochastic combination of over-rotation errors) and the RELM and CLM methods, given as example local mitigation methods in this proposal, have low sampling costs for such noise.

**Claims**

1. A computing system for computing with quasi-stochastic noise tailoring of a target gate, which may be a noise-free target gate or a noisy target gate comprising:

   - a quantum computer or device (3) configured to implement a set $\left\{\widetilde{U}_i\right\}_{i=0}^{N_{\mathrm{M}}}$ of noisy gate-variants, where $N_{\mathrm{M}}$ is the number of additional gates required for the mitigation or tailoring, said noisy gate-variants being different implementations of the target gate $\breve{U}_{\mathrm{T}}$ to be tailored with different noise models, and/or to characterise each noisy gate-variant $\breve{U}_i$ by determining its corresponding noise channel $\varepsilon_i$, and
   - a classical computer (5) configured to determine a linear combination of the noise channels $\varepsilon_i$ that is equivalent to a tailored noise channel $\varepsilon_{\mathrm{T}}$ of interest and/or to aid in the characterisation of each noisy gate-variant.

2. The computing system according to claim 1, **characterised in that** the classical computer (5) is configured to represent each noise channel $\varepsilon_i$ by a corresponding error transfer matrix $\hat{T}_{\varepsilon_i}$ and to represent the tailored noise channel $\varepsilon_{\mathrm{T}}$ of interest by a corresponding tailored error transfer matrix $\hat{T}_{\varepsilon_{\mathrm{T}}}$, such that the determination of said linear combination is equivalent to solving the following target equations:

$$\sum_{i=0}^{N_{\mathrm{M}}} c_i\, \hat{T}_{\varepsilon_i} = \hat{T}_{\varepsilon_{\mathrm{T}}},$$

   where $c_i$ are the linear coefficients of the linear combination.

3. The computing system according to claim 2, **characterised in that** the classical computer (5) is configured to determine a set of said linear coefficients $c_i$ such that the sampling cost ( $\sum_{i=0}^{N_{\mathrm{M}}}|c_i|$ ) is minimised.

4. The computing system according to any one of the preceding claims, **characterised in that** the characterisation of the set of noisy gate-variants $\left\{\widetilde{U}_i\right\}_{i=0}^{N_{\mathrm{M}}}$ is carried out by tomography on the quantum computer (3) or by simulation on the classical computer (5).

5. The computing system according to any one of claims 2 to 4, **characterised in that** the quantum computer or device (3) is configured to implement the set $\left\{\widetilde{U}_i\right\}_{i=0}^{N_{\mathrm{M}}}$ of noisy gate-variants according to the corresponding set of linear coefficients $c_i$ such that each noisy gate-variant $\breve{U}_i$ is executed on the quantum computer (3) with a probability related to the corresponding coefficient $c_i$, the quantum computer (3) being further configured to implement a quantum measurement to measure the outcome of the circuit that features the noisy gate-variant $\breve{U}_i$ at each execution; and **in that** the classical computer (5) is configured to calculate a weighted sum of all measured outcomes with coefficients derived from the set of linear coefficients $c_i$.

6. The computing system according to any one of the preceding claims, **characterised in that** the quantum computer or device (3) is configured to implement the noisy gate-variants using one or a combination of the following techniques: different pulse sequences, changing the hardware implementation of the target gate, different compositions or compilations with respect to other gates or operations, adding additional gates before or after the target gate in a stochastic or deterministic manner, repeated applications of the target gate, and alternating sets of the target gate and its inverse.

7. The computing system according to any one of the preceding claims, **characterised in that** the tailored noise channel $\varepsilon_{\mathrm{T}}$ of interest is a Pauli noise channel represented by a tailored error transfer matrix whose off-diagonal elements are all equal to zero.

8. The computing system according to claim 7 when dependent on any one of claims 2 to 6, **characterised in that**

   - the quantum computer or device (3) is configured to implement the set $\left\{\widetilde{U}_i\right\}_{i=0}^{N_{\mathrm{M}}}$ of the noisy gate-variants such that the sum of the modulus of the linear coefficients ( $\sum_{i=0}^{N_\mathrm{M}} |c_i|$ ) is equal to unity or that the sum of the modulus ( $\sum_{i=0}^{N_\mathrm{M}} |c_i|$ ) of their linear coefficients is minimal, and **in that**

- the classical computer (5) is configured to only solve the equations relating to the off-diagonal elements of the error transfer matrices $\hat{T}_{\varepsilon i}$.

9. The computing system according to any of the preceding claims, **characterised in that** the tailored noise channel $\varepsilon_\mathrm{T}$ of interest is an identity channel corresponding to a targeted error transfer matrix equal to the identity, giving a noise-free gate.

10. The computing system of claim 9, when dependent on any one of claims 2 to 6, **characterised in that**

- the quantum computer or device (3) is configured to implement the set $\{\widetilde{U}_i\}_{i=0}^{N_\mathrm{M}}$ of the noisy gate-variants by using only repeated applications of $\tilde{U}$, a single noisy variant of the target gate ($U$) to be mitigated and the noisy inverse gate $\widetilde{U^\dagger}$, which may be equal to $\tilde{U}$, if the gate is Hermitian, and such that the error transfer matrices of $\tilde{U}$ and $\widetilde{U^\dagger}$ are diagonalisable and commute with the transfer matrix of the target gate U as well as with the transfer matrix of the inverse target gate $U^\dagger$, and

- the classical computer (5) is configured to determine a set $\{\lambda_k\}_{k=0}^{N_\mathrm{M}}$ of distinct eigenvalues of the error transfer matrix and to determine the linear coefficients $c_i$ by solving the following set of eigenvalue equations:

$$\sum_{i=0}^{N_\mathrm{M}} c_i \lambda_k^{2i+1} = 1.$$

11. The computing system according to claim 1, **characterised in that** the quantum computer or device is configured to implement in hardware a collection of elementary physical operations which could be concatenated to form a quantum circuit or gate, and **in that** the quantum computer or device is configured to implement a set $\{\widetilde{u}_i\}_{i=0}^{N_\mathrm{p}}$ of noisy physical operation-variants for each elementary noise-free physical operation, each physical operation-variant having the same noise-free component but a different elementary noise channel, and to characterise each noisy physical operation-variant by determining its corresponding elementary noise channel, and **in that** the classical computer (5) is configured to determine a linear combination of the elementary noise channels $\varepsilon_i$ that is equivalent to a tailored elementary noise channel $\varepsilon_\mathrm{T}$ of interest.

12. The computing system according to claim 11, **characterised in that** the elementary physical operations form an efficient universal set of elementary physical-operations for quantum computing, **in that** a given collection of elementary physical operations can efficiently represent any given quantum circuit at any precision, that is with a polynomial overhead in the number of gates in the target circuit, where the overhead associated with the increase in precision is polynomial in the inverse of the precision.

13. The computing system according to claim 11, **characterised in that** the elementary physical operations form an efficient complete set of elementary physical-operations for a specific purpose proposed for the quantum computer or device, **in that** a given collection of elementary physical operations can efficiently represent any given quantum circuit that is required for the execution of the specific purpose of the quantum computer or device to arbitrary precision, where the overhead associated with the increase in precision is polynomial in the inverse of the precision.

14. The computing system according to any one of the preceding claims, **characterised in that** it comprises a classical-quantum interface (7) configured to couple the classical computer (5) to the quantum computer or device (3).

15. A computing method for quasi-stochastic noise tailoring of a target gate, comprising the following steps:

- implement, using a quantum computer (3), a set $\{\widetilde{U}_i\}_{i=0}^{N_\mathrm{M}}$ of noisy gate-variants, which are variants of the target gate to be tailored with the same noise free component but different error channels,
- characterise, each noisy gate-variant $\tilde{U}_i$ by determining its corresponding noise channel, and
- determine, using a classical computer, a linear combination of the noise channels that is equivalent to a tailored noise channel of interest.

FIG. 1

$$\tilde{U}_T = (U, \mathcal{E}_i) \quad \text{—— E1}$$

$$\left\{ \tilde{U}_i \right\}_{i=0}^{N_M} \quad \text{—— E2}$$

$$\tilde{U}_i = (U, \mathcal{E}_i) \longrightarrow \mathcal{E}_i \longleftrightarrow \hat{T}_{\mathcal{E}_i} \quad \text{—— E3}$$

3

$$\left\{ \mathcal{E}_i \right\} \longrightarrow \mathcal{E}_T$$

$$\sum_{i=0}^{N_M} c_i \hat{T}_{\mathcal{E}_i} = \hat{T}_{\mathcal{E}_T} \quad \text{—— E4}$$

5

3

$$\tilde{U}_i \longrightarrow <\hat{o}>_n \quad \text{—— E5}$$

5

$$<\hat{o}>_n = \frac{1}{N_R} \sum_{n=0}^{N_R} C_n <\hat{o}>_n \quad \text{—— E6}$$

# FIG. 2

21

$$U \quad \text{— E11}$$

$$\left\{ \tilde{U}_i \right\}_{i=0}^{N_M} \quad \text{— E12}$$

$$\tilde{U}_i = (U, \mathcal{E}_i) \longrightarrow \mathcal{E}_i \longleftrightarrow \hat{T}_{\mathcal{E}_i} \quad \text{— E13}$$

3

5

E14

$$\left\{ \mathcal{E}_i \right\} \longrightarrow \mathcal{E}_T$$

$$\sum_{i=0}^{N_M} c_i = 1$$

$$\sum_{i=0}^{N_M} c_i (A)_{ki} = 0$$

# FIG. 3

$$E21 \quad \boxed{U}$$

$$E22 \quad \boxed{\left\{ \tilde{U}_i \right\}_{i=0}^{N_M}}$$

$$3$$

$$E23 \quad \boxed{\tilde{U}_i = (U, \varepsilon_i) \longrightarrow \varepsilon_i \longleftrightarrow \hat{T}_{\varepsilon_i}}$$

$$5$$

$$E24 \quad \boxed{\sum_{i=0}^{N_M} c_i . A_{ki} = (t)_k}$$

# FIG. 4

$$\tilde{U}_T \quad \text{—— E31}$$

$$\left\{ \tilde{U}_i \right\}_{i=0}^{N_M} \quad \text{—— E32}$$
$$\tilde{U}_i = (\tilde{U}\tilde{U}^\dagger)^i \tilde{U}$$

3

$$\tilde{U} \longrightarrow \varepsilon \quad \text{—— E33}$$
$$\tilde{U}^\dagger \longrightarrow \varepsilon$$

5

E34
$$\varepsilon \longrightarrow \hat{T}_\varepsilon$$

$$\hat{T}_\varepsilon \stackrel{?}{=} \hat{V}_\varepsilon \hat{D}_\varepsilon \hat{V}_\varepsilon^{-1} \quad \text{—— E35}$$
$$\hat{T}_\varepsilon \hat{T}_U \stackrel{?}{=} \hat{T}_U \hat{T}_\varepsilon \;;\; \hat{T}_\varepsilon \hat{T}_{U^\dagger} \stackrel{?}{=} \hat{T}_{U^\dagger} \hat{T}_\varepsilon$$

E36
$$\left\{ \lambda_k \right\}_{k=0}^{N_M}$$
$$\sum_{i=0}^{N_M} c_i \cdot \lambda_k^{2i+1} = 1$$

## FIG. 5

| | Europäisches Patentamt |
|---|---|
| | European Patent Office |
| | Office européen des brevets |

## EUROPEAN SEARCH REPORT

**Application Number**

EP 23 21 9489

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENYU CAI ET AL: "Quantum Error Mitigation", ARXIV.ORG, CORNELL UNIVERSITY LIBRARY, 201 OLIN LIBRARY CORNELL UNIVERSITY ITHACA, NY 14853, 30 June 2023 (2023-06-30), XP091551032, * section III.B and H, Appendix A.1 * | 1-15 | INV. G06N10/70 G06N10/20 |
| X | TEMME KRISTAN ET AL: "Error Mitigation for Short-Depth Quantum Circuits", PHYSICAL REVIEW LETTERS, [Online] vol. 119, no. 18, 6 November 2017 (2017-11-06), XP055785975, US ISSN: 0031-9007, DOI: 10.1103/PhysRevLett.119.180509 Retrieved from the Internet: URL:https://arxiv.org/pdf/1612.02058.pdf> [retrieved on 2024-05-30] * supplemental material III-VI; page 1 - page 4 * | 1-15 | |
| A,D | BICHEN ZHANG ET AL: "Hidden Inverses: Coherent Error Cancellation at the Circuit Level", ARXIV.ORG, CORNELL UNIVERSITY LIBRARY, 201 OLIN LIBRARY CORNELL UNIVERSITY ITHACA, NY 14853, 1 April 2022 (2022-04-01), XP091190002, DOI: 10.1103/PHYSREVAPPLIED.17.034074 * the whole document * | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 31 May 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190018721 A

**Non-patent literature cited in the description**

- **BICHEN ZHANG et al.** Hidden inverses: Coherent error cancellation at the circuit level. *Phys. Rev. Appl.*, 2022, vol. 17, 034074